(19) Europäisches Patentamt
European Patent Office
Office européen des brevets

(11) EP 1 367 077 B1

(12) **EUROPEAN PATENT SPECIFICATION**

(45) Date of publication and mention of the grant of the patent: **07.09.2005 Bulletin 2005/36**

(21) Application number: **02742456.3**

(22) Date of filing: **08.01.2002**

(51) Int Cl.[7]: **C08G 59/42**, C08G 59/20, C09D 163/00

(86) International application number: **PCT/JP2002/000013**

(87) International publication number: **WO 2002/066536 (29.08.2002 Gazette 2002/35)**

(54) **CURABLE COMPOSITION**

HÄRTBARE ZUSAMMENSETZUNG

COMPOSITION DURCISSABLE

(84) Designated Contracting States: **DE FR GB IT**

(30) Priority: **11.01.2001 JP 2001003748**

(43) Date of publication of application: **03.12.2003 Bulletin 2003/49**

(73) Proprietor: **Asahi Kasei Kabushiki Kaisha**
**Osaka 530-8205 (JP)**

(72) Inventors:
- **SHIMODA, Teruyoshi**
  **c/o Asahi Kasei Kabushiki k.**
  **Kurashiki-shi, Okayama (JP)**
- **ISHIDA, Hiroshi**
  **Kurashiki-shi, Okayama 710-0807 (JP)**

(74) Representative: **Blake, John Henry Francis**
**Brookes Batchellor LLP**
**102-108 Clerkenwell Road**
**London EC1M 5SA (GB)**

(56) References cited:
**EP-A- 0 773 268**
**EP-A2- 0 773 268**
**WO-A-97/08237**
**JP-A- 11 080 613**
**EP-A- 1 041 115**
**EP-A2- 1 041 115**
**WO-A2-97/08237**

- **PATENT ABSTRACTS OF JAPAN vol. 1999, no. 08, 30 June 1999 (1999-06-30) & JP 11 080613 A (KANSAI PAINT CO LTD), 26 March 1999 (1999-03-26)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 367 077 B1

## Description

## Technical Field

The present invention relates to a curable composition comprising an epoxy compound and a hexanetricarboxylic acid. More specifically, the present invention relates to a curable composition comprising an epoxy compound and hexanetricarboxylic acid, which can be advantageously used for a cast molding material, an electric insulation material, an adhesive agent, a coating and the like, especially for a coating.

## Background art

Heretofore, a curable composition comprising an epoxy compound and a curable agent has been used widely, for example, for various cast molding materials, an electric insulation material, an adhesive agent, and a coating. As a curing agent contained in the curable composition, amine type compounds, carboxyl group-containing compounds, acid anhydride type compounds, Lewis acids and the like have been employed according to various uses and performance of cured products obtained therefrom.
Among these curing agents, acid anhydride type compounds and carboxyl group-containing compounds provide cured products which are excellent in electric properties, chemical resistance to acids and further mechanical properties. Moreover, these compounds have advantages such that molding characteristics are good and fillers can be added in a large amount due to the low viscosity of the compositions comprising these compounds and epoxy compounds at molding temperature. However, these compounds have a drawback of slow curing speed despite of their good storage stability compared to amine compounds. Therefore, when acid anhydride type compounds or carboxyl group-containing compounds are used, it has been necessary to control the curing time or curing temperature by means of, for example, accelerating reaction speed by adding a curing accelerator such as tertiary amine type compounds and triphenylphosphine in order to obtain cured products having desirable physical properties.
Among the carboxyl group-containing compounds, none has been capable of effectively shortening the curing time without a curing accelerator.
On the other hand, the carboxyl group-containing compounds have been generally used as a curing agent for epoxy compounds in the coating field, particularly the powder coating field and the aqueous coating field. Especially, in the powder coating field, a carboxyl group-containing compound has been used as a curing agent of acrylic type resin containing epoxy group such as glycidyl group, and the coating film obtained therefrom has had high weatherability and abrasion resistance and has been used for outdoor uses such as a road material. The powder coating comprising a composition of carboxyl group-containing compound and acrylic type resin containing epoxy group such as glycidyl group can be usually obtained by melt kneading the compound and resin at a temperature of 150 °C or less and pulverizing the mixture. In the case of forming a film by using powder coating, the powder coating is applied on the objects to be coated in the state of powder or in the state of being dispersed in water with surfactant or the like, and then cured by heating at a temperature of around 180 °C.
A powder coating, an aqueous coating and an aqueous slurry coating are expected to be an environment-friendly coating for the reason that organic solvent is not used or the amount of organic solvent used can be enormously reduced. The uses and the use amount of these coatings are apt to expand recently. For instance, they are proposed to use as topcoat for cars, and some of them have started to be put to practical use.
As the expansion of the uses and use amount of powder coating or the like, studies have been made for significant improvement of the powder coating in various properties.
For instance, JP-A-9-188833 discloses a powder coating composition comprising an epoxy group-containing acrylic resin, a polyvalent carboxylic acid and an anti-oxidant having a melting point of 50-140 °C as a powder coating capable of forming a film with excellent yellowing resistance and appearance. This document exemplifies, as the polyvalent carboxylic acid, aliphatic dibasic acids such as adipic acid and sebacic acid, aromatic polyvalent carboxylic acids, alicyclic dibasic acids, and teaches that decanedicarboxylic acid is preferred. JP-T-11-504063 discloses an acid composition comprising polyvalent carboxylic acid solid particles having a specific structure coated with a coating material comprising polymer as a cross-linking agent for a powder coating which can reduce sublimation of acid particles from powder coating during curing process and has long storage shelf-life. However, none of the above technologies has been able to shorten curing time sufficiently and curing at a lower temperature like 150 °C or less has been difficult.
Moreover, JP-A-11-80613 proposes a thermosetting acrylic powder coating composition containing an aliphatic carboxylic acid compound having three or more carboxyl groups in a specific amount together with an aliphatic dibasic acid for the purpose of improving injury resistance, acid rain resistance and storage stability, and specifically discloses to use 1,2,4-butanetricarboxylic acid or 1,2,3,4-butanetetracarboxilic acid together with decanedicarboxylic acid. However, the coating film obtained from these compositions cannot be said to be sufficient in the aspect of gloss.
As described above, a curable composition which is capable of sufficiently shortening curing time has not yet

been proposed. Moreover, there has not yet been provided a curable coating composition enabling curing at 150 °C or less and being excellent in bonding property, gloss, and further dispersibility in water and the like.

**Disclosure of the invention**

An object of the present invention is to provide a composition which is short in curing time and enables curing at a lower temperature, a curing method of the same, and a cured product with excellent mechanical properties and weatherability obtained by curing the above-mentioned composition.

Another object of the present invention is to provide a coating which is short in curing time and enables curing at a lower temperature, and further has an improved dispersibility in water and excellent compatibility with epoxy compound and storage stability, and a film obtained by curing the above-mentioned coating.

Focusing on a compound having three or more carboxyl groups per molecule as a curing agent, the present inventors have made intensive and extensive studies in order to shorten the curing time and obtain a strong cured product. As a result, it has been found that, by using hexanetricarboxylic acid, particularly 1,3,6-hexanetricarboxylic acid, as a curing agent for epoxy compound, the curing time can be significantly shortened, and further a cured product with sufficient physical properties can be obtained without a curing accelerator in a practical curing time even in the case of curing at 150 °C or less, which has been heretofore assumed difficult.

In addition, the present inventors have found that hexanetricarboxylic acid, particularly 1,3,6-hexanetricarboxylic acid has high compatibility with an epoxy compound derived from bisphenol A, especially with glycidyl group-containing acrylic type resin. Further, it has been found that the cured product with sufficient physical properties can be obtained even in the case where a mixing ratio of carboxyl group of hexanetricarboxylic acid to epoxy group of epoxy compound is an equivalent or less, and the curable composition obtained therefrom has high dispersibility in water and can provide an excellent slurry. Moreover, it has been found that the cured product obtained by curing the composition has various excellent properties such as mechanical properties and weatherability and adhesive properties as a coating film. As a result, the present inventors have accomplished the present invention. Namely, the present invention is as described below.

(1) A curable composition comprising (a) an epoxy compound containing two or more epoxy groups per molecule and (b) a curing agent, wherein the curing agent comprises hexanetricarboxylic acid.
(2) The curable composition according to the above (1), wherein the curing agent contains 1 wt% or more of the hexanetricarboxylic acid.
(3) The curable composition according to the above (1), wherein an equivalent ratio of the carboxylic acid group of the hexanetricarboxylic acid to the epoxy group of the epoxy compound is 0.01 to 5.
(4) The curable composition according to any one of the above (1) to (3), wherein the hexanetricarboxylic acid is 1,3,6-hexanetricarboxylic acid.
(5) The curable composition according to any one of the above (1) to (4), wherein the epoxy compound is a glycidyl group-containing acrylic resin.
(6) A coating comprising the composition according to any one of the above (1) to (5).
(7) The coating according to the above (6), wherein the coating is a powder coating or a slurry coating.
(8) A cured product obtained by curing the composition according to any one of the above (1) to (5).
(9) A coating film obtained by curing the coating according to the above (6).
(10) A clear coating film obtained by curing the coating according to the above (6).
(11) A curing method comprising the step of curing the composition according to any one of the above (1) to (5) at 80 to 150 °C.

**Brief Description of Drawings**

Fig. 1 is a proton nuclear magnetic resonance spectrum (hereinafter referred to as 1H-NMR spectrum) of 1,3,6-hexanetricarboxylic acid used in the examples of the present invention.
Fig. 2 is a differential thermal curve (hereinafter referred to as DSC curve) of 1,3,6-hexanetricarboxylic acid used in the examples of the present invention.
Fig. 3 is an DSC curve of the curable composition obtained in Example 1.
Fig. 4 is an DSC curve of the curable composition obtained in Comparative Example 1.

## Best Mode for Carrying Out the Invention

Hereafter, the present invention is described in detail.

The curable composition of the present invention comprises (a) an epoxy compound containing two or more epoxy groups per molecule and (b) a curing agent. The composition of the present invention may comprise a compound containing one epoxy group per molecule, a curing catalyst, a curing accelerator, various additives or the like, if necessary.

In the present invention, the curing agent indicates a compound that can react with epoxy group and form a cross-liking structure. The composition of the present invention is characterized in that the curing agent comprises a hexanetricarboxylic acid. By comprising hexanetricarboxylic acid, the composition of the present invention exhibits effects of short curing time and good dispersibility in water and also that the resultant cured product is excellent in mechanical property or the like. In the case of using conventional curing agents instead of hexanetricarboxylic acid, the effects of the present invention can not be sufficiently exhibited owing to the following problems.

Among the carboxyl group-containing compounds, the compound containing two or more carboxyl groups per molecule, for instance, conventional compound containing two or more carboxyl groups per molecule such as adipic acid, sebacic acid, decanedicarboxylic acid and trimellitic acid, has drawbacks that the temperature of mixing with epoxy compound is close to that of curing reaction, the compatibility with epoxy compound is low, the compound containing carboxyl group sublimates at the curing temperature and the like due to its high melting point of 120 °C or more.

Since aliphatic dibasic acids such as sebacic acid and decanedicarboxylic acid, aliphatic cyclic dibasic acids and aromatic carboxylic acids used generally as a carboxyl group-containing compound for powder coating have usually a melting point of about 130 °C or more, it is necessary in the case of using these compounds to increase the temperature of melt kneading with epoxy compound and conduct curing at about 160 °C or more, at which these curing agents are sufficiently molten. When the curing temperature is set at 180 °C or more for the purpose of shortening the curing time, the curing agent tends to decarboxylate or a cured product (coating film) tends to discolor. Moreover, sebacic acid and decanedicarboxylic acid have low solubility or affinity with water so that the resultant composition has low dispersibility in water. Therefore, when these conventional carboxyl group-containing compounds are used as a curing agent, there is limitation on shortening the curing time, lowering the curing temperature and improving dispersibility in water, which have been demanded these days. In addition, cis-1,2-cyclohexanedicarboxylic acid, one of the aliphatic cyclic dibasic acids, has high water affinity with water, but it tends to cause blocking at room temperature and decrease in storage stability and coating processing property due to its melting point of 32 °C when being applied to a powder coating.

When 1,2,4-butanetricarboxylic acid is used together with decanedicarboxylic acid, the resultant cured product (coating film) tends to decrease in surface smoothness and gloss with increase of the content of 1,2,4-butanetricarboxylic acid. Particularly, in the case of using 1,2,4-butanetricarboxylic acid alone, gloss (gloss value measured at 60°) is decreased by 30 % or more compared to the case of using decanedicarboxylic acid. It is difficult to disperse 1,2,3,4-butanetetracarboxylic acid uniformly in a curable composition by melt kneading due to its melting point of 190 °C or more.

Although anhydride type compounds, which are generally used as a curing agent for epoxy compound and are liquid or solid having a melting point of 12 0 °C or less at normal temperature, are excellent in compatibility, kneading property, viscosity during molding and the like, they usually have hygroscopicity and generate a carboxyl group by absorbing moisture in the air. In particular, when absorption occurs in the state of mixture of epoxy compound and tertiary amine which is a curing accelerator, acids derived from carboxyl group generated by absorption and the accelerator form salt and deactivate catalyst performance, resulting in reduction of the curing speed and inferior curing. Moreover, acid anhydride compounds tend to cause decarboxylation reaction in the presence of tertiary amine.

The hexanetricarboxylic acid used in the present invention as a curing agent indicates a compound comprising bonding three carboxyl groups to straight or branched chain saturated hydrocarbons having 6 carbon atoms. Examples of the hexanetricarboxylic acid include 1,2,5-hexanetricarboxylic acid, 1,1,6-hexanetricarboxylic acid, 1,3,5-hexanetricarboxylic acid, 1,2,6-hexanetricarboxylic acid, 1,3,3-hexanetricarboxylic acid, 1,2,4-hexanetricarboxylic acid, 2,4,4-hexanetricarboxylic acid, 1,4,5-hexanetricarboxylic acid, 1,3,4-hexanetricarboxylic acid, 3-carboxymethyl-1, 5-pentanedicarboxylic acid and 1, 3 , 6-hexanetricarboxylic acid and the like. Among these , 1,2,5-, 1,3,5-, 1,2,6-, 1,2,4-, 1,4,5-, 1,3,4- and 1,3,6-tricarboxylic acids and 3-carboxymethyl-1,5-pentanedicarboxylic acid are preferred. Further, 1,3,6-hexanetricarboxylic acid and 3-carboxymethyl-1,5-pentanedicarboxylic acid are more preferred in high heat stability. In particular, 1,3,6-hexanetricarboxylic acid has a melting point of about 110 °C so that it is easy to mix with epoxy compound and has a high compatibility with various epoxy compounds. Moreover, it has high affinity with water and excellent curing property and provides a cured product having excellent physical properties. Accordingly, 1,3,6-hexanetricarboxylic acid is most preferred.

In the present invention, the above-mentioned hexanetricarboxylic acids may be used alone or in combination of two or more kinds of them.

The method for producing hexanetricarboxylic acid used in the present invention is not particularly limited. For instance, 1,3,6-hexanetricarboxylic acid can be easily obtained by a method comprising trimerizing acrylonitrile produced industrially on a large scale, a method comprising reacting acrylonitrile and adiponitrile in the presence of alkali and a method comprising hydrolyzing a trinitrile compound obtained in the production of adiponitrile by electro-dimerization of acrylonitrile using acids such as sulfuric acid or alkali such as caustic soda.

The composition of the present invention may contain a compound capable of reacting with epoxy group to form cross -linking structure such as carboxyl group-containing compounds other than the above-mentioned hexanetricarboxylic acid and acid anhydride as other curing agent according to the use.

The carboxyl group-containing compound that can be used as other curing agent is preferably a compound containing two or more carboxyl groups per molecule, particularly, aliphatic, aromatic and alicyclic polyvalent carboxylic acids. Preferred examples of aliphatic polyvalent carboxylic acids include glutaric acid, adipic acid, suberic acid, sebacic acid, azelaic acid, decanedicarboxylic acid, hexadecanedicarboxylic acid, eicosanoic dicarboxylic acid, tetraeicosanoic dicarboxylic acid, copolymer of acrylic acid or methacrylic acid, polyester, polyamide and the like. Preferred examples of aromatic polyvalent carboxylic acid include isophthalic acid, phthalic acid, trimellitic acid, 1,3,5-benzenetricarboxylic acid and the like. Preferred examples of alicyclic polyvalent acid include hexahydrophthalic acid, tetrahydrophthalic acid, 1,4-cyclohexanedicarboxylic acid, 1,2,3,4-cyclobutanetetracarboxylic acid and the like. Preferred examples of acid anhydride include anhydrides of the above-mentioned aliphatic, aromatic and alicyclic polyvalent carboxylic acids, and the like. When the other curing agents are used, either one kind or two or more kinds thereof may be used together with hexanetricarboxylic acid.

When the composition of the present invention is used in the field of the coating such as powder coating or the coating used with being dispersed in water, it can advantageously contain aliphatic polyvalent carboxylic acid such as sebacic acid and decanedicarboxylic acid and anhydride thereof together with hexanetricarboxylic acid as other curing agent.

In the curing agent used in the present invention, the content of the hexanetricarboxylic acid is preferably 0.1 to 100 wt%, more preferably 1 to 100 wt%, further preferably 10 to 100 wt%, particularly preferably 50 to 100 wt%, most preferably 80 to 100 wt% from the viewpoint of curing speed, dispersibility in water and mechanical properties of the resultant cured product.

The curable composition of the present invention comprises epoxy compound containing two or more epoxy groups per molecule. The epoxy group in the present invention means a tricyclic structure comprising carbon-carbon-oxygen. The carbon-carbon part in the epoxy group may be either a part of straight or branched chain hydrocarbon or a part of hydrocarbon forming cyclic structure such as pentacyclic structure and hexacyclic structure. Moreover, to these hydrocarbon structures, functional groups such as halogen like fluorine, chlorine and bromine, hydroxyl groups and nitrile groups may be bonded. Further, alkyl groups such as methyl group, halogen and the like may be bonded to the carbon atom forming the epoxy group.

There is no particular limitation on the structure of the epoxy compound as long as the epoxy compound contains two or more epoxy groups per molecule. Further, the epoxy compound may be either low molecular compounds or polymer compounds.

Examples of the epoxy compound include, for example, compounds containing two or more glycidyl group or bonding groups as shown below.

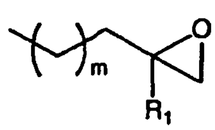

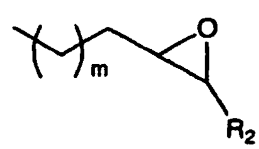

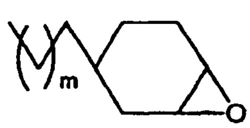

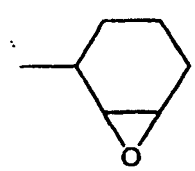

(wherein R1 and R2 each represents a hydrocarbon group having 1 to 12 carbon atoms and m represents an integer of 0 to 3.)

Examples of the epoxy compound used in the present invention include, for example, compounds containing

glycidyl groups or the above-mentioned bonding groups through ether bonding, compounds containing glycidyl groups or the above-mentioned bonding groups through ester bonding, compounds containing glycidyl groups bonded directly to nitrogen atom or the above-mentioned bonding groups bonded directly to nitrogen atom, alicyclic epoxy compounds, polymers containing epoxy groups, and the like. These epoxy compounds may be used alone or in combination of two or more kinds according to the various uses or physical properties desired.

Examples of the epoxy compound containing glycidyl group through ether bonding include, for example, ethyleneglycol diglycidyl ether, propylene glycol diglycidyl ether, butanediol diglycidyl ether, pentanediol diglycidyl ether, neopentylglycol diglycidyl ether, hexanediol diglycidyl ether, cyclopentanediol diglycidyl ether, cyclohexanediol diglycidyl ether, cyclohexanedimethanol diglycidyl ether, hydrogenated bisphenol A diglycidyl ether, hydrogenated bisphenol F diglycidyl ether, diethyleneglycol diglycidyl ether, trimethylolpropane triglycidyl ether, pentaerythritol triglycidyl ether, diglycidyl ether derived from hydroquinone, diglycidyl ether derived from resorcinol, diglycidyl ether derived from catechol, diglycidyl ether derived from bisphenol A, diglycidyl ether derived from bisphenol F, diglycidyl ether derived from bisphenol AD, diglycidyl ether derived from bisphenol S, diglycidyl ether derived from 4,4'-dihydroxy biphenyl, diglycidyl ether derived from 3,3',5,5'-tetramethyldihydroxy biphenyl, glycidyl ether compound derived from phenolnovolak resin, glycidyl compound derived from cresolnovolak resin; halides and oligomers thereof; and the like. Among these, diglycidyl ether derived from bisphenol A is preferably used since it can be liquid or solid depending on a molecular weight and is readily available as bisphenol A type epoxy resin in general.

Examples of compounds containing glycidyl group through ester bonding include phthalic acid diglycidyl, maleic acid diglycidyl, terephthalic acid diglycidyl, isophthalic acid diglycidyl, naphthalenedicarboxylic acid diglycidyl, biphenyldicarboxylic acid diglycidyl, succinic acid diglycidyl, fumaric acid diglycidyl, glutaric acid diglycidyl, adipic acid diglycidyl, suberic acid diglycidyl, sebacic acid diglycidyl, decanedicarboxylic acid diglycidyl, cyclohexanedicarboxylic acid diglycidyl, trimellitic acid diglycidyl, glycidyl ester derived from dimer acids; halides and oligomers thereof; and the like.

Examples of the compound having glycidyl group bonded to nitrogen atom include compounds derived from isocyanuric acid such as triglycidyl isocyanurate; compounds derived from amines such as tetraglycidyl diaminodiphenylmethane, triglycidyl aminophenol, diglycidyl aniline, diglycidyl toluidine, tetraglycidylmethaxylene diamine, tetraglycidyl hexamethylene diamine and tetraglycidyl bisaminomethyl cyclohexane; glycidyl compounds derived from hydantoin type compounds; and halides thereof and oligomers thereof.

Examples of the aliphatic epoxy compound include bis(3,4-epoxycyclohexyl)adipate, bis(3,4-epoxycyclohexyl)terephthalate, 3,4-epoxycyclohexyl-3,4-epoxycyclohexanecarboxylate, 3,4-epoxycyclohexylmethyl-3,4-epoxycyclohexanecarboxylate, bis(3,4-epoxycyclohexylmethyl)oxalate, bis(3,4-epoxy-6-methylcyclohexyl)adipate, bis(3,4-epoxycyclohexylmethyl)pimelate, vinylcyclohexane dioxide and the like.

Examples of the polymer containing epoxy groups include compounds containing, for example, glycidyl group, the bonding group represented by the above formula or the like in the terminal, side chain or branched chain, and having a weight average molecular weight of 800 to 5,000,0000 and molecular weight distribution, e. g. , resin having polyester structure, resin having polyamide structure and homopolymer or copolymer of monomer having polymeric unsaturated double bond.

When the composition of the present invention is used, for instance, for the coating used outdoor, the homopolymer or copolymer of monomer having polymeric unsaturated double bond can be preferably used as epoxy compound from the viewpoint of weatherability. This polymer is a polymer of one or more than one kinds of monomers having epoxy group, or a copolymer of monomer having epoxy group and monomer not having epoxy group. As a monomer having epoxy group, for instance, compounds containing glycidyl group or methylglycidyl group represented by the following formula can be particularly preferably used.

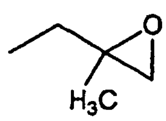

Examples of the monomer having polymeric unsaturated double bond and epoxy group together include, for example, glycidyl ester and methylglycidyl ester of (meth)acrylic acid such as glycidyl(meth)acrylate and β-methylglycidyl(meth) acrylate, glycidyl ether and methylglycidyl ether of arylalcohol, glycidyl ether and methylglycidyl ether of arylalcohol, N-glycidylacrylic acid amide, vinylsulfonic acid glycidyl, and the like. In the present invention, (meth)acrylic acid means acrylic acid or methacrylic acid.

Examples of the monomer having polymeric unsaturated double bond and no epoxy group and being copolymerizable with the above-mentioned monomer having epoxy group include, for instance, acryl type monomers such as esters of (meth)acrylic acid and (meth)acrylate having hydroxyl group and other monomers. Examples of esters of

(meth)acrylic acid include methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, hexyl(meth)acrylate, cyclohexyl(meth)acrylate, 2-ethylhexyl(meth)acrylate, octyl(meth)acrylate, 2-ethyloctyl(meth)acrylate, benzyl(meth)acrylate, dodecyl(meth)acrylate, phenyl(meth)acrylate, stearyl (meth)acrylate and the like. Examples of (meth)acrylates having hydroxyl group include 2-hydroxyethyl(meth)acrylate, 2-hydroxypropyl(meth)acrylate, 2-hydroxycyclohexyl(meth)acrylate and the like. Examples of other monomers copolymerizable with the monomer having epoxy group include hydrocarbons such as styrene, $\alpha$-methylstyrene and vinyl toluene; nitriles such as acrylonitrile and methacrylonitrile; amides such as acryl amide, methacryl amide and methylolacryl amide; esters such as fumaric acid dialkylester and itaconic acid dialkylester; vinyl oxazoline; vinyl acetate; vinyl propionate; lauryl vinyl ether; halogen-containing vinyl monomer; silicon-containing vinyl monomer; and the like.

Among the epoxy compounds in the composition of the present invention, glycidyl group-containing acrylic resin provides a cured product excellent in durability such as weatherability and abrasion resistance so that it is preferably used in the coating field, particularly in the powder coating, slurry coating, aqueous coating and solvent type coating fields. In the present invention, the "glycidyl group-containing acrylic resin" means acryl type resin having glycidyl group. The particularly preferably used is a copolymer comprising methyl methacrylate and glycidyl methacrylate as a main component, and further glycidyl group-containing acrylic resin such as copolymer comprising methyl methacrylate, glycidyl methacrylate and styrene as a main component.

The glycidyl group-containing polymer preferably has a number average molecular weight of 1,000 to 100,000, when used, for instance, for coating. In particular, the number average molecular weight of preferably 1,000 to 30,000, further preferably 2,000 to 20,000 advantageously exhibits high film formability of coating film, high smoothness of the resultant coating film, and excellent kneading property with curing agent. The number average molecular weight in the present invention means a value measured by gel permeation chromatograph (GPC) using polystyrene as a standard substance, which is a relative value to the standard substance.

Although the epoxy equivalent of the epoxy compound generally ranges from 85 to 10,000 g/equivalent, it is not limited in this range. For instance, epoxy compound comprising glycidyl ether derived from bisphenol A generally has an epoxy equivalent of 180 to 5,000 g/equivalent. The epoxy equivalent of the glycidyl group-containing acrylic resin used in the present invention usually ranges from 200 to 5,000 g/equivalent, particularly preferably from 300 to 2,500 g/equivalent.

The composition ratio of the epoxy compound and hexanetricarboxylic acid is not particularly limited and properly selected depending on the use amount of other curing agent and the uses. In general, it is preferred that the equivalent ratio of carboxyl group of hexanetricarboxylic acid to epoxy group of the epoxy compound (carboxyl group/epoxy group) ranges from 0.01 to 5. In particular, the equivalent ratio ranges preferably from 0.1 to 3, more preferably from 0.3 to 2.5, most preferably from 0.5 to 2 for remarkable exhibition of the curability of hexanetricarboxylic acid and compatibility of the resultant composition with water and production of the cured product having an improved cross-linking density and excellent mechanical properties. When the curing agent comprises a curing agent other than hexanetricarboxylic acid, the equivalent ratio of the whole carboxyl groups in the curing agent to epoxy group of epoxy compound (carboxyl group/epoxy group) is preferably 0.5 to 1.5.

In general, the curable composition comprising an epoxy compound and a carboxyl group-containing compound is used in an equivalent ratio of epoxy group and carboxyl group of 1 or vicinity thereof. When the equivalent ratio deviates considerably from 1, the gel fraction of the cured product tends to decrease. However, in the case of using hexanetricarboxylic acid, particularly 1,3,6-hexanetricarboxylic acid, as a curing agent in the curable composition of the present invention, sufficient gel fraction can be achieved in a short curing time even when the equivalent ratio deviates considerably from 1. This fact shows that the curing agent comprising hexanetricarboxylic acid, particularly 1,3,6-hexanetricarboxylic acid, can achieve more effective curing reaction compared to the conventional curing agent.

The composition of the present invention can be obtained by mixing compound comprising hexanetricarboxylic acid and the above-mentioned epoxy compound, and the production method is not particularly limited. For instance, the composition of the present invention can be produced by a method comprising kneading curing agent containing hexanetricarboxylic acid and epoxy compound at room temperature or while heating, a method comprising dispersing or dissolving both compounds in water or organic solvent, a method comprising dispersing or dissolving both compounds in water or organic solvent and removing the water or organic solvent used, and the like.

To the composition of the present invention, curing accelerators, reaction diluents, fillers, reinforcing agents, flame retardants such as antimony trioxide, bromines and aluminum hydroxide, dyes, pigments, mold release agents, flow control agents, plasticizers, anti-oxidants, ultraviolet light absorbers, light stabilizers, defoaming agents, leveling agents, colorants, titanium dioxide, solvents and the like can be added in accordance with various uses. The amount of these additives to be added can be arbitrarily selected in the range where the effect of the present invention is not ruined. With respect to the method of mixing these additives, there is no limitation and common mixing method can be adopted.

Examples of the curing accelerator include, for instance, imidazoles such as 2-ethyl-4-methylimidazole, and

2-methylimidazole and 1-benzyl-2-methylimidazole; tertiary amines such as dimethylcyclohexylamine, benzyldimethylamine and tris(diaminomethyl)phenol; diazabicycloalkenes such as 1,8-diazabicyclo(5,4,0)undecene-7 and salts thereof; organometallic compounds such as zinc octylate, tin octylate and aluminum-acetylacetone complex; organophosphorus compounds such as triphenylphosphine and triphenylphosphite; boron type compounds such as boron trifluoride, boron trifluoride diethyl ether complex, boron trifluoride piperidine complex and triphenyl borate; metal halides such as zinc chloride and stannic chloride; quaternary ammonium compounds; alkali metal alcoholates such as sodium alcoholates of 2,4-dihydroxy-3-hydroxymethylpentane; anacardic acid and salts thereof; phenols such as cardol, cardanol, phenol, nonylphenol and cresol; and the like.

Examples of the reaction diluent include butylglycidyl ether, arylglycidyl ether, 2-ethylhexylglycidyl ether, styrene oxide, phenylglycidyl ether, cresylglycidyl ether, p-sec-butylphenylglycidyl ether, glycidylmethacrylate, tert-carboxylic glycidyl ether, and the like.

Examples of the filling agent and reinforcing agent include, for instance, coal tar, bitumen, woven cloth, a glass fiber, an asbestos fiber, a boron fiber, a carbon fiber, an aromatic polyamide fiber, mineral silicate, mica, quartz powder, aluminum hydroxide, bentonite, kaolin, silicic acid aerogel, metal powder such as aluminum powder and iron powder, and the like.

Examples of the mold release agent and the flow control agent include, for instance, silicone, aerosil, colloidal hydrated aluminum silicate, wax, stearate, calcium carbonate, talc, and the like.

Examples of the plasticizer include pine oil, low viscosity liquid-like polymer, rubber-like material, tar, polysulfide, urethane prepolymer, polyol, diethyl phthalate, dibutyl phthalate, polymers of epichlorohydrin, dioctyl phthalate, dioctyl adipate, tricresyl phosphate, and the like.

Examples of the ultraviolet light absorber include "Tinuvin (trade name)" (manufactured and sold by Ciba Specialty Chemicals Co., Ltd.). Examples of the steric hindrance amine type light stabilizer and the phenol type antioxidant include, for instance, "Tinuvin 144 (trade name)", "Irganox 1010 (trade name)" and "Irgafos P-EPQ (trade name)" (all manufactured and sold by Ciba Specialty Chemicals Co., Ltd.). There is no particular limitation on the method of adding these additives and common mixing method can be adopted.

Examples of the pigment include azo pigment; copper phthalocyanine pigment; basic dye lake; acid dye lake; mordant dyeing type pigment; construction dyeing type pigment; quinacridone type pigment; dioxazine type pigment; coloring pigment such as carbon black, chromate, ferrocyanide, titanium oxide, selenium sulfide, silicate, carbonate, phosphate and metallic powder; and body pigment such as barium sulphate, barium carbonate, gypsum, alumina white, clay, silica, talc, calcium silicate and magnesium carbonate.

As other additives, dryer such as cobalt naphthenate, skinning prohibitors such as methoxy phenol and cyclohexane oxime, puffing agent such as highpolymerized linseed oil, organobentonite and silica, anti-blister agent such as benzoin; and flow control agent such as "Modaflow (trade name)" (manufactured and sold by Monsanto Co. Ltd.), "Resiflow (trade name)" (manufactured and sold by Worlee Co. Ltd.) and "Acronal (trade name)" (manufactured and sold by BASF AG), can be preferably used.

The composition of the present invention can be cured by energy such as heat and ultraviolet ray. For instance, in the case of curing the composition of the present invention by heating, the composition can be cured usually at a temperature of room temperature to 250 °C, preferably 80 to 200 °C, more preferably 80 to 150 °C. Depending on the composition, the curing time usually ranges from several seconds to 200 hours.

The composition of the present invention can be suitably used for matrix resin of electric insulation material, adhesive and composite material, adhesive, sealing agent, coating, and the like. When used for electric insulation material, the composition of the present invention can be used specifically as cast molding agent, sealing agent for semiconductor, insulating coating and laminated plate.

The composition of the present invention can be particularly preferably used as coating such as powder coating, aqueous coating, slurry coating and solvent type coating. In general, the powder coating is a solid and obtained by melt kneading epoxy compound and curing agent without solvent. The aqueous coating is such that is obtained by mixing epoxy compound and curing agent uniformly in the presence of aqueous solvent. The slurry coating is such a solid-liquid heterogeneous coating that is obtained by dispersing powder coating in aqueous or organic dispersing solvent. The solvent type coating is such that is obtained by mixing epoxy compound and curing agent uniformly in the presence of organic solvent. In particular, the effect of using the hexanetricarboxylic acid, especially 1,3,6-hexanetricarboxylic acid, of the present invention is more remarkably exhibited in the powder coating that has problems of difficulty in melt kneading and sublimation of curing agent during curing when the conventional carboxyl group-containing compound is used as it is. Moreover, the composition of the present invention is excellent in the melt kneading properties with epoxy compound, and further in dispersibility in water so that it also shows remarkable effects when used for slurry coating, particularly aqueous dispersion slurry coating. When the composition is used as aqueous dispersion slurry coating or aqueous coating, dispersing agent or emulsifying agent may be used together. In the case the composition of the present invention is used as a solvent type coating, non-reactive and/or reactive organic solvent is preferably used together as diluent for the purpose of decreasing the viscosity of the curable composition. Examples

of these diluents include acetone, methyl ethyl ketone, methyl isobutyl ketone and the like, but they are not limited to these examples.

There is no particular limitation regarding the production method of powder coating, aqueous dispersion slurry coating, aqueous coating and solvent type coating, and the general method can be adopted. For instance, powder coating can be obtained by a method comprising mixing each component by Henschel mixer or the like and pulverizing and distributing the resultant so as to achieve a desirable particle size distribution after melt kneading, a method comprising dissolving each component in the solvent and pulverizing and distributing the resultant after removing the solvent, and the like. The aqueous dispersion slurry coating can be obtained by a method comprising mixing and dispersing the powder coating produced as mentioned above, if necessary together with surfactant, with water, and the like. When the epoxy compound is a glycidyl group-containing acrylic resin and dispersed in water or the like in the state of latex, the aqueous dispersion slurry may be produced by dissolving hexanecarboxylic acid in the latex. The aqueous coating or solvent type coating can be obtained, for instance, by dissolving each composition to the dispersion medium such as water and organic solvent in order to obtain a desirable composition. Although the range of the particle size of the powder coating is not particularly limited in the above-mentioned powder coating, it usually ranges from 0.1 to 500 μm, preferably from 1 to 100 μm. Further, the particle size of the dispersed powder coating is usually 0.05 to 300 μm, preferably 0.1 to 100 μm in the above-mentioned aqueous dispersion slurry coating, though it is not particularly limited.

When the composition of the present invention is molded as a coating, a coating film can be formed by applying the composition on a material to be coated using spray, roll, brush, roll coater or the like, and then curing by heating, UV or electron irradiation. In the case of forming a coating film by heating, the curing can be conducted usually at room temperature to 250 °C, desirably at 80 to 200 °C, more desirably at 80 to 150 °C. Depending on the composition, the curing time usually ranges from several seconds to 200 hours.

When the epoxy compound in the composition of the present invention is glycidyl group-containing acrylic resin and comprises no pigment, a clear coating film can be formed and is advantageously applicable, for instance, to topcoat of vending machines, road materials, cars or the like. In this case, the above-mentioned various coating method can be adopted as a method of forming coating film with high curing speed and the resultant film is excellent in durability such as weatherability.

When the composition of the present invention comprises 1,3,6-hexanetricarboxylic acid and glycidyl group-containing acrylic resin and, for instance, is applied in the state of slurry wherein powder coating or powder is dispersed in water followed by curing by heating, it is needless to say that the film can be cured in the temperature range over 150 °C, a coating film having excellent physical properties can be obtained in a practical curing time even at a low curing temperature, 80 to 150 °C, which is the range recently demanded.

The coating film obtained by the present invention is excellent in durability such as weatherability, and can be used advantageously for cans, cars, ships, and construction and civil engineering materials, as a protection material for metals, concrete bodies, woods and plastic materials.

## Examples

Hereinafter, the present invention is specifically illustrated referring to Examples. However, the present invention is not limited thereto. The production method and measurement results of 1,3,6-hexanetricarboxylic acid and glycidyl group-containing methacrylic resin used in Examples and Comparative Examples and the evaluation results of the composition obtained in Examples and Comparative Examples are shown below.

(1) 1,3,6-hexanetricarboxylic acid

In Examples, 1,3,6-hexanetricarboxylic acid obtained by hydrolyzing 1,3,6-hexanetrinitrile was used. 1H-NMR spectrum of 1,3,6-hexanetricarboxylic acid used is shown in Fig. 1. The 1H-NMR spectrum was measured by using JNM-α400 (400MHz) manufactured and sold by JEOL Ltd., with tetramethylsilane as a standard substance and deuterium dimethylsulfoxide as a solvent.

Further, 1,3,6-hexanetricarboxylic acid used in Examples was measured by differential scanning calorimeter (hereinafter referred to as DSC). The obtained DSC curve is shown in Fig. 2. The measurement by DSC was conducted by maintaining about 5.0 mg of 1, 3,6-hexanetricarboxylic acid at 40 °C in a nitrogen atmosphere for 2 minutes and heating it to 180 °C at an increasing speed of 10 °C/min using the following apparatus.
Apparatus: Differential Scanning Calorimeter DSC7 (manufactured and sold by PERKIN ELMER Co., Ltd.)

(2) Glycidyl group-containing methacrylic resin

351 parts by mass of methyl methacrylate, 138 parts by mass of glycidyl methacrylate and 20 parts by mass of styrene were polymerized in 2,000 parts by mass of toluene at 60 °C for 4 hours by using azobisisobutylnitrile as

an initiator. The obtained solution was purified with methanol by re-precipitation to obtain glycidyl group-containing methacrylic resin having a number average molecular weight of 4,700 and epoxy equivalent of 500 g/equivalent, and being solid at room temperature.

Herein, the number average molecular weight and epoxy equivalent was measured by the following method.

(i) Number average molecular weight

The number average molecular weight was measured by gel permeation chromatography (GPC) analysis. The analysis was conducted by dissolving 2.0 mg of glycidyl group-containing methacrylic resin in 2.0 g of tetrahydrofuran and filtering with 0.5 μm filter and then developing and detecting under the following conditions. Measurement apparatus: HLC-8120 GPC manufactured and sold by Tosoh Corporation Detector: RI Developing liquid: tetrahydrofuran Flow speed of developing liquid: 1.0 ml/min Column: TSK gel manufactured and sold by Tosoh Corporation (Japan)

One of $GMH_{HR}$-N and two of $G1000H_{XL}$ were arranged in series Column temperature: 40 °C

(ii) Epoxy equivalent

The epoxy equivalent of glycidyl group-containing acrylic resin was calculated from the ratio of the integration value of proton on the carbon atom bonded by the oxygen atom of glycidyl group to the integration value of the whole proton obtained by the 1H-NMR spectrum measured under the following conditions.
Apparatus: JNM-α400 (400MHz) manufactured and sold by JEOL Ltd.
Solvent: deuterium chloroform
Standard substance: tetramethylsilane

(3) Curability

The curability of the composition was evaluated by using curing initiation time and curing time. By using CURELASTOMETER III (manufactured and sold by Japan Synthetic Rubber Co., Ltd.) as a measurement apparatus, torque value was measured at each temperature with the time lapse and torque curve (the vertical axis: torque value, the horizontal axis: time) was obtained. The momentary time when the torque curve leaves the base line in the measurement range of 2 N·m (20kgf·cm) was defined as a curing initiation time and a time when the torque value reached 1 N·m was defined as the curing time.

(4) Adhesive property

The adhesive property was evaluated by visual observation of the bonded state of the coating film by the cross cut test according to JIS K 5400. Specifically, the film was cut with a retractable knife to make 100 squares of about 1 mm × 1 mm and "the number of squares which was not peeled off by tape/100 squares" was assumed to be an evaluation result.

(5) Gel fraction

After about 1 g of the pulverized cured product was dissolved to 100 ml of tetrahydrofuran, stirred at 25 °C for 24 hours, and then filtered. The obtained filtration residue was vacuum dried at 30 °C for 24 hours. By using the weight of the dried filtration residue and the weight of the cured product, the gel fraction was calculated by the following equation.

$$\text{Gel fraction} = (\text{the weight of the filtration residue after drying} / \text{the weight of the cured product}) \times 100$$

(6) Dispersibility to water

The dispersibility to water was evaluated by visual observation of the appearance of the obtained slurry composition. The case where the obtained composition was uniform slurry was evaluated with "O" , and the case where a water phase having a small content of powder was apparently observed in the lower layer was evaluated with "X".

(7) Gloss

The gloss was evaluated by using the mirror glossiness measured according to JIS K 5400 at incidence and optical receiving angles of 60 degrees, respectively.

Example 1

0.889 g of 1,3,6-hexanetricarboxylic acid and 6.111 g of glycidyl group-containing methacrylic resin were mixed in the state of powder. The composition at that time had the equivalent ratio of carboxyl group to the epoxy group (carboxyl group / epoxy group) of 1. The resultant powder composition was melt kneaded with a spatula made of stainless steel on a hot plate at 125 °C for 1 minute to obtain a solid curable composition. The viscosity of the composition during the melt kneading operation was low so that mixing could be conducted easily.

The obtained curable composition was colorless and transparent. When DSC measurement was conducted, the melt ing point of 1,3,6-hexanetricarboxylic acid was not observed and the composition was mixed with high uniformity. The obtained DSC curve is shown in Fig. 3.

The curability of the obtained composition was evaluated. The curing initiation time and curing time at each temperature are shown in Table 1.

Comparative Examples 1-3

The melt kneading operation was conducted in the same manner as in Example 1 except that instead of 1,3,6-hexanetricarboxylic acid, decanedicarboxylic acid (Comparative Example 1), sebacic acid (Comparative Example 2) or adipic acid (Comparative Example 3) was used with such a composition that made the equivalent ratio of epoxy group and carboxyl group to be 1. In any of Comparative Examples, the composition had high viscosity and was not kneaded sufficiently at 125 °C.

On the other hand, when the temperature of the hot plate was set in the range of 150 to 156 °C, the composition had such viscosity that enabled kneading so that a solid curable composition was obtained. However, in the case of using adipic acid, severe sublimation occurred and preferable kneading could not be conducted.

All of the obtained compositions had white and opaque color. When the composition obtained by using decanedicarboxylic acid was measured by DSC, the endothermic peak originated from the melting point of decanedicarboxylic acid was observed and the uniformity of the composition was low. The obtained DSC curve is shown in Fig. 4.

The curability of the obtained compositions were evaluated. The curing initiation time and curing time at each temperature are shown in Table 1.

Table 1

| | | Ex.1 | Comp. Ex.1 | Comp. Ex.2 | Comp. Ex.3 |
|---|---|---|---|---|---|
| 1,3,6-hexanetricarboxylic acid 0 889 | [g] | 0.889 | 0 | 0 | 0 |
| decanedicarboxylic acid | [g] | 0 | 1.309 | 0 | 0 |
| sebacic acid | [g] | 0 | 0 | 1.176 | 0 |
| adipic acid | [g] | 0 | 0 | 0 | 0.889 |
| glycidyl group-containing methacrylic resin | [g] | 6 111 | 5.691 | 5.824 | 6.111 |
| Equivalent ratio (carboxyl group/epoxy group) | | 1 | 1 | 1 | 1 |
| Kneading Property | Melt kneading temp.: 125°C | Good | Poor | Poor | Poor |
| | Melt kneading temp.: 150°C | - | Good | Good | Poor |
| Curing initiation time at 150°C | [min] | 1.9 | 5.7 | 4.9 | 3.0 |
| Curing initiation time at 160°C | [min] | 1.3 | 3.5 | 3.2 | 2.2 |
| Curing initiation time at 180°C | [min] | 0.5 | 1.5 | 1.3 | 1.2 |

Table 1 (continued)

| | | Ex.1 | Comp. Ex.1 | Comp. Ex.2 | Comp. Ex.3 |
|---|---|---|---|---|---|
| Time for reaching 1N·m at 150°C | [min] | 10.3 | 39.5 | 37.5 | 25.4 |
| Time for reaching 1N·m at 160°C | [min] | 7.2 | 24.3 | 16.8 | 15.2 |
| Time for reaching 1N·m at 180°C | [min] | 2.2 | 15.5 | 11.8 | 5.1 |

Example 2

7.30 g of 1,3,6-hexanetricarboxylic acid and 18.7 g of liquid bisphenol A epoxy resin having epoxy equivalent of 187 g/equivalent (equivalent ratio of epoxy group and carboxyl group: 1) were stirred at 115 °C for 3 minutes to obtain a uniform curable composition having low viscosity and being colorless and transparent.
When the composition was returned to the room temperature, it became high viscous liquid state close to semisolid state. The composition was also colorless and transparent at room temperature and cloudiness by non-uniformity did not occur.
When the curability of the obtained composition was evaluated, the curing initiation time and curing time at 160 °C were 25.4 minutes and 52.5 minutes, respectively.
After the composition was left in an open system at room temperature for 20 days, the appearance of the composition did not change at all and appearance change by moisture absorption or the like did not occur. Further, the curable composition left for 20 days had a curing initiation time of 25.5 minutes and a curing time of 52.2 minutes. In addition, it hardly showed change in the curability, and exhibited excellent storage stability.

Example 3

7.30 g of 1,3,6-hexanetricarboxylic acid and 18.7 g of liquid bisphenol A epoxy resin used in Example 2 (equivalent ratio of epoxy group and carboxyl group: 1) and 0.2 g of triphenyl phosphine were stirred at 115 °C for 3 minutes to obtain a curable composition with low viscosity and transparent straw color in the uniform state.
When the curability of the resultant composition was evaluated, the curing initiation time and curing time at 160 °C were 2.3 minutes and 4.7 minutes, respectively. This fact shows that triphenyl phosphine works effectively as a curing accelerator.

Comparative Example 4

15.4 g of hexahydro-phthalic anhydride, 18.7 g of liquid bisphenol A epoxy resin used in Example 2 and 0.3 g of N,N-dimethylbenzyl amine were stirred at 70 °C for 3 minutes to obtain a curable composition with low viscosity and transparent straw color in the uniform state. When the composition was cooled to the room temperature, no change was observed in appearance.
After the composition was left in the open system at room temperature for 20 days, the surface of the composition became clouded and opaque owing to moisture absorption.

Examples 4-7

A curable composition was prepared by melt kneading 1,3,6-hexanetricarboxylic acid and glycidyl group-containing methacrylic resin at 125°C with the composition described in Table 2. The resultant curable composition was pulverized with Henschel mixer and classified with 100 μm mesh to prepare powder coating having a particle size of 100 μm or less.
The obtained powder coating was applied on the SPCC steel board and heat curing was conducted to obtain a coating film (clear coating film) having a film thickness of about 120 μm. The resultant coating film was subjected to evaluation of the adhesive property (adhesive property according to the cross cut test) and measurement of gel fraction. The results are shown in Table 2.
Table 2 shows that sufficient curability was obtained even at a low temperature of 40 °C when a curing agent comprising hexanetricarboxylic acid was used. Further, it shows that the resultant coating film had sufficient adhesive property and high gel fraction even when the amount of the curing agent mixed was small.

Moreover, when the gloss of the coating film obtained under the curing condition of 160 °C × 30 minutes was evaluated in Example 4, mirror glossiness at 60 degrees was 91.

Table 2

| | Ex.4 | Ex.5 | Ex.6 | Ex.7 | Comp. Ex.5 | Comp. Ex.6 | Comp. Ex.7 | Comp. Ex.8 |
|---|---|---|---|---|---|---|---|---|
| 1,3,6-hexanetricarboxylic acid [wt%] | 12.7 | 10.4 | 6.8 | 17.9 | 0 | 0 | 0 | 0 |
| decanedicarboxylic acid [wt%] | 0 | 0 | 0 | 0 | 18.7 | 15.5 | 10.3 | 25.7 |
| glycidyl group-containing methacrylic resin [wt%] | 87.3 | 89.6 | 93.2 | 82.1 | 81.3 | 84.5 | 89.7 | 74.3 |
| Equivalent ratio (carboxyl group/epoxy group) | 1 | 0.8 | 0.5 | 1.5 | 1 | 0.8 | 0.5 | 1.5 |
| Cross cut adhesive property test | | | | | | | | |
| 140°C × 60 min curing | 100/100 | 100/100 | 96/100 | 100/100 | 6/100 | 0/100 | 0/100 | 12/100 |
| 140°C × 90 min curing | 100/100 | 100/100 | 98/100 | 100/100 | 5/100 | 1/100 | 0/100 | 32/100 |
| 160°C × 30 min curing | 100/100 | 100/100 | 100/100 | 100/100 | 100/100 | 90/100 | 28/100 | 100/100 |
| Gel fraction | | | | | | | | |
| 140°C × 60 min curing | 94.5 | 91.2 | 88.7 | 100 | 82.2 | 82.1 | 74.5 | 88.6 |
| 140°C × 90 min curing | 100 | 100 | 97.4 | 100 | 84.5 | 84.8 | 79.1 | 88.7 |
| 160°C × 30 min curing | 100 | 100 | 99.2 | 100 | 88.6 | 86.9 | 81.2 | 89.4 |

Comparative Examples 5-8

A coating film (clear coating film) having a film thickness of about 120 μm was prepared by the same operation as in Examples 4-7 except that decanedicarboxylic acid was used instead of 1,3,6-hexanedicarboxylic acid and the melt kneading was conducted at 150 °C. The resultant coating film was subjected to evaluation of the adhesive property (adhesive property according to cross cut test) and measurement of the gel fraction. The results are shown in Table 2.

Further, when the gloss of the coating films obtained under the curing condition of 160 °C × 30 minutes were evaluated in Example 4 and Comparative Example 5, mirror glossiness at 60 degrees was both 91. This fact and Table 2 show that the coating film obtained by using a curing agent comprising hexanetricarboxylic acid exhibits excellent adhesive property while maintaining similar gloss to the coating film obtained by using decanedicarboxylic acid.

Examples 8 and 9 and Comparative Examples 9 and 10

A white coating film was obtained by applying powder coating comprising 91.7 parts by mass of carboxyl group-containing polyester resin, "GV 230" (trade name, manufactured and sold by Japan U-PiCA Co., Ltd.), 8.3 parts by mass of triglycidyl isocyanurate and 50 parts by mass of titanium oxide on the SPCC steel plate, followed by curing at 180 °C for 1 hour.

The powder coating obtained in the same manner as in Example 4, Example 7, Comparative Example 5 and Comparative Example 8 was each applied on the above-mentioned white coating film (Examples 8 and 9 and Comparative Examples 9 and 10, respectively), and cured by heating at 130 °C, 140 °C or 160 °C to obtain clear coating films having a film thickness of about 80 μm. The adhesive properties (adhesive properties according to cross cut test) of the coating film obtained were evaluated. The results are shown in Table 3.

In the case of using 1,3,6-hexanetricarboxylic acid, a coating film having sufficient adhesive strength in the temperature region lower than 150 °C was obtained within the practical curing time.

Table 3

| | Ex.8 | Ex.9 | Comp. Ex.9 | Comp. Ex.10 |
|---|---|---|---|---|
| 1,3,6-hexanetricarboxylic acid [wt%] | 12.7 | 17.9 | 0 | 0 |
| decanedicarboxylic acid [wt%] | 0 | 0 | 18.7 | 25.7 |
| glycidyl group-containing methacrylic resin [wt%] | 87.3 | 82.1 | 81.3 | 74.3 |
| Equivalent ratio (carboxyl group/epoxy group) | 1 | 1.5 | 1 | 1.5 |
| Cross cut adhesive property test | | | | |
| 130°C × 60 min curing | 98/100 | 100/100 | 0/100 | 0/100 |
| 130°C × 90 min curing | 100/100 | 100/100 | 0/100 | 14/100 |
| 140°C × 60 min curing | 100/100 | 100/100 | 6/100 | 45/100 |
| 140°C × 90 min curing | 100/100 | 100/100 | 90/100 | 94/100 |
| 160°C × 30 min curing | 100/100 | 100/100 | 100/100 | 100/100 |

Examples 10-12 and Comparative Examples 11 and 12

With the various compositions described in Table 4, powder coating having a particle size of 100 μm or less classified with 100 μm mesh was prepared. Using the resultant powder coating, slurry coating comprising 30 wt% of coating and 70 wt% of distilled water was prepared.

The dispersibility to water of the slurry coating obtained above was evaluated. The results are shown in Table 4 . Table 4 shows that the aqueous dispersion slurry coating obtained from a powder coating using a curing agent comprising hexanetricarboxylic acid achieves excellent dispersible state.

Table 4

| | | Ex.10 | Ex.11 | Ex 12 | Comp.Ex.11 | Comp. Ex.12 |
|---|---|---|---|---|---|---|
| 1,3,6-hexanetricarboxylic acid | [wt%] | 12.7 | 10.4 | 10.5 | 0 | 0 |
| decanedicarboxylic acid | [wt%] | 0 | 0 | 10.5 | 18.7 | 0 |
| sebacic acid | [wt%] | 0 | 0 | 0 | 0 | 16.8 |

Table 4 (continued)

| | | Ex.10 | Ex.11 | Ex 12 | Comp.Ex.11 | Comp. Ex.12 |
|---|---|---|---|---|---|---|
| glycidyl group-containing methacrylic resin | [wt%] | 87.3 | 89.6 | 79.0 | 81.3 | 83.2 |
| Equivalent ratio (carboxyl group/epoxy group) | | 1 | 0.8 | 1.5 | 1 | 1 |
| Content of hexanetricarboxylic acid in curing agent | [wt%] | 100 | 100 | 50 | 0 | 0 |
| Dispersibility to water | | O | O | O | X | X |

Example 13

The coating film cured at 140 °C for 90 minutes in Example 8 was subjected to 250 hour xenon arc irradiation under the irradiation conditions of black panel at 63 °C and 60 W/$m^2$ with Wether-O-meter ci35 (manufactured and sold by ATLAS ELECTRIC DEVICE Co. , Ltd.) . When the gloss at 60 degrees of the surface of the cured product before and after subjected to the test was measured, the product had a gloss retention of 90 % or more relative to the gloss before the test and exhibited excellent weatherability.

## Industrial applicability

The composition of the present invention enables shortening of the curing time and curing at lower temperature. In addition, the composition of the present invention is excellent in compatibility with epoxy compound and storage stability, and has excellent properties such as improved dispersibility. The composition of the present invention can be advantageously used for matrix resin of electric insulation material, adhesive agent and composite material, adhesive agent, sealing agent, coating and the like, and the cured product obtained therefrom has excellent mechanical properties and durability. The composition of the present invention is particularly useful in the coating field. The coating film obtained from the coating comprising the composition of the present invention is excellent in durability such as weatherability so that it can be advantageously applied to can, car, ship and construction and civil engineering material as a protection material for metals, concrete bodies, woods and plastics.

## Claims

**1.** A curable composition comprising (a) an epoxy compound containing two or more epoxy groups per molecule and (b) a curing agent, wherein the curing agent comprises hexanetricarboxylic acid.

**2.** The curable composition according to claim 1, wherein the curing agent contains 1 wt% or more of the hexanetricarboxylic acid.

**3.** The curable composition according to claim 1, wherein an equivalent ratio of the carboxylic acid group of the hexanetricarboxylic acid to the epoxy group of the epoxy compound is 0.01 to 5.

**4.** The curable composition according to any one of claims 1 to 3, wherein the hexanetricarboxylic acid is 1,3,6-hexanetricarboxylic acid.

**5.** The curable composition according to any one of claims 1 to 4, wherein the epoxy compound is a glycidyl group-containing acrylic resin.

**6.** A coating comprising the composition according to any one of claims 1 to 5.

**7.** The coating according to claim 6, wherein the coating is a powder coating or a slurry coating.

**8.** A cured product obtained by curing the composition according to any one of claims 1 to 5.

**9.** A coating film obtained by curing the coating according to claim 6.

**10.** A clear coating film obtained by curing the coating according to claim 6.

11. A curing method comprising the step of curing the composition according to any one of claims 1 to 5 at 80 to 150 °C.

**Patentansprüche**

1. Härtbare Zusammensetzung, umfassend (a) eine Epoxyverbindung, die zwei oder mehr Epoxygruppen pro Molekül enthält, und (b) ein Härtungsmittel, wobei das Härtungsmittel Hexantricarbonsäure umfasst.

2. Härtbare Zusammensetzung gemäß Anspruch 1, wobei das Härtungsmittel 1 Gew.-% oder mehr der Hexantricarbonsäure enthält.

3. Härtbare Zusammensetzung gemäß Anspruch 1, wobei das Äquivalentverhältnis der Carbonsäuregruppen der Hexantricarbonsäure zur Epoxygruppe der Epoxyverbindung 0,01 zu 5 beträgt.

4. Härtbare Zusammensetzung gemäß einem der Ansprüche 1 bis 3, wobei es sich bei der Hexantricarbonsäure um 1,3,6-Hexantricarbonsäure handelt.

5. Härtbare Zusammensetzung gemäß einem der Ansprüche 1 bis 4, wobei die Epoxyverbindung ein Glycidylgruppen enthaltendes Acrylharz ist.

6. Beschichtung, die die Zusammensetzung gemäß einem der Ansprüche 1 bis 5 umfasst.

7. Beschichtung gemäß Anspruch 6, wobei die Beschichtung eine Pulverbeschichtung oder eine Aufschlämmungsbeschichtung ist.

8. Gehärtetes Produkt, das durch Härten der Zusammensetzung gemäß einem der Ansprüche 1 bis 5 erhalten wird.

9. Beschichtungsfilm, der durch Härten der Zusammensetzung gemäß Anspruch 6 erhalten wird.

10. Klarer Beschichtungsfilm, der durch Härten der Zusammensetzung gemäß Anspruch 6 erhalten wird.

11. Härtungsverfahren, das den Schritt des Härtens der Zusammensetzung gemäß einem der Ansprüche 1 bis 5 bei 80 bis 150 °C umfasst.

**Revendications**

1. Composition durcissable comprenant (a) un composé époxy contenant deux groupes époxy ou plusieurs groupes époxy par molécule et (b) un agent de durcissement, l'agent de durcissement comprenant un acide hexanetricarboxylique.

2. Composition durcissable suivant la revendication 1, dans lequel l'agent de durcissement comprend 1% en poids ou plus de 1% en poids de l'acide hexanetricarboxylique.

3. Composition durcissable suivant la revendication 1, dans lequel le rapport d'équivalent du groupe acide carboxylique de l'acide hexanetricarboxylique au groupe époxy du composé époxy est compris entre 0,01 et 5.

4. Composition durcissable suivant l'une quelconque des revendications 1 à 3, dans lequel l'acide hexanetricarboxylique est l'acide 1, 3, 6-hexanetricarboxylique.

5. Composition durcissable suivant l'une quelconque des revendications 1 à 4, dans lequel le composé époxy est une résine acrylique contenant un groupe glycidyle.

6. Revêtement comprenant la composition suivant l'une quelconque des revendications 1 à 5.

7. Revêtement suivant la revendication 6, dans lequel le revêtement est un revêtement en poudre ou un revêtement en suspension.

**8.** Produit durci obtenu en durcissant la composition suivant l'une quelconque des revendications 1 à 5.

**9.** Pellicule de revêtement obtenue en durcissant le revêtement suivant la revendication 6.

**10.** Pellicule limpide de revêtement obtenue en durcissant le revêtement suivant la revendication 6.

**11.** Procédé de durcissement comprenant un stade de durcissement de la composition suivant l'une quelconque des revendications 1 à 5 entre 80 et 150°C.

FIG. 1

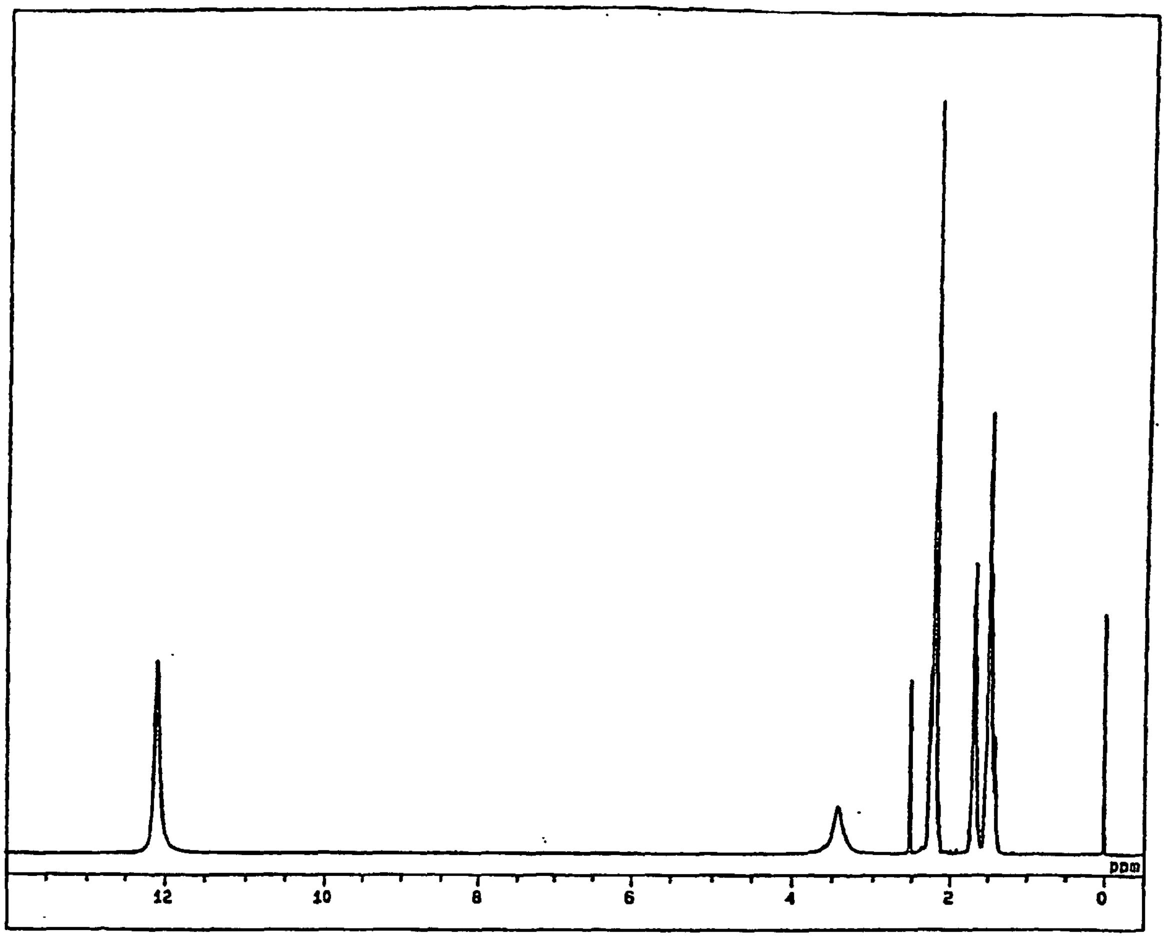

*FIG. 2*

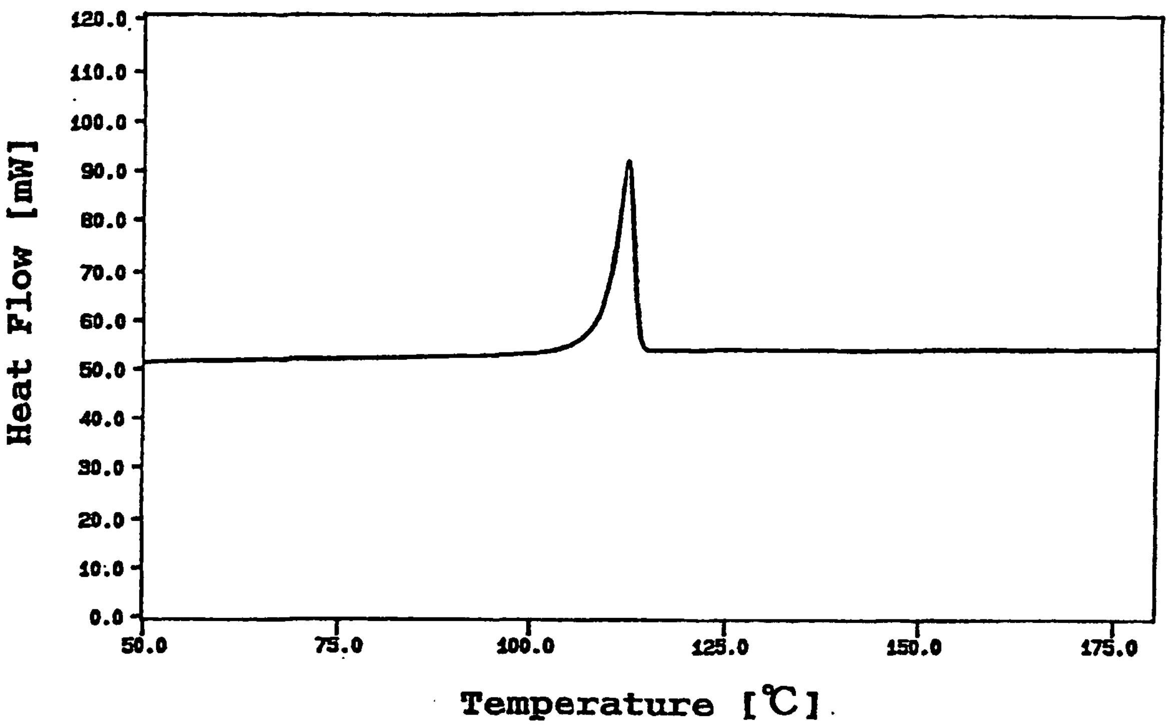
120.0
110.0
100.0
90.0
80.0
70.0
60.0
50.0
40.0
30.0
20.0
10.0
0.0
Heat Flow [mW]
50.0
75.0
100.0
125.0
150.0
175.0
Temperature [℃]

*FIG. 3*

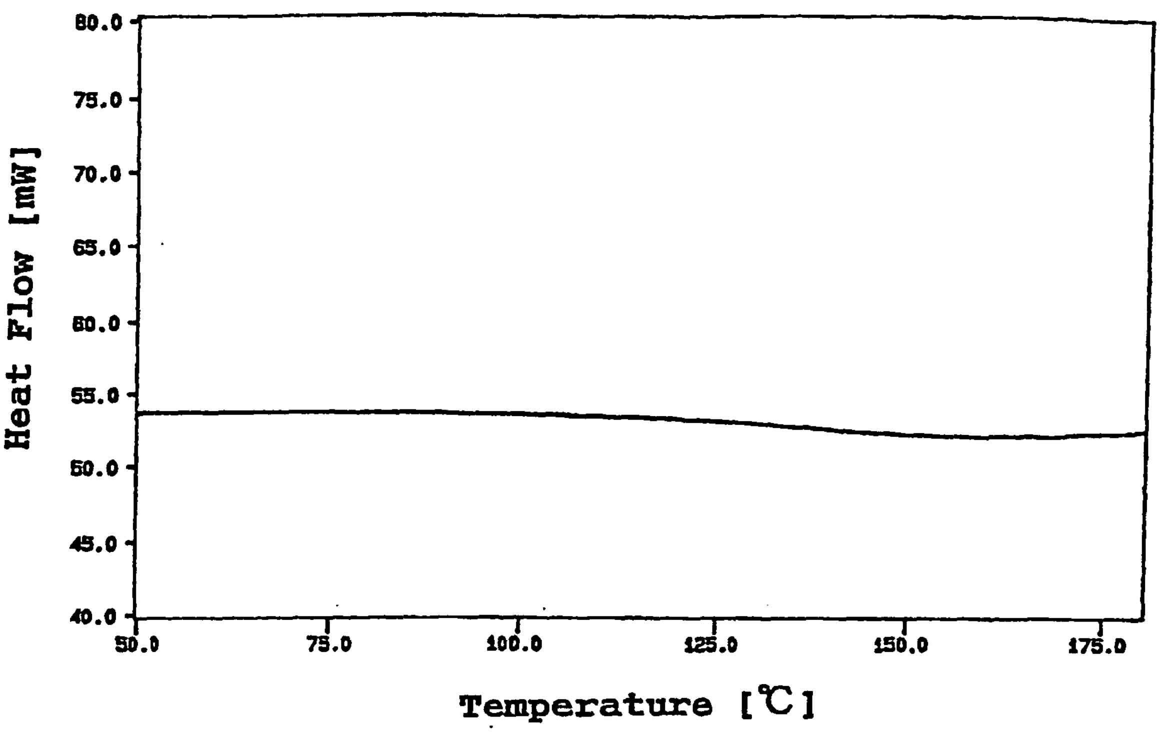
80.0
75.0
70.0
65.0
60.0
55.0
50.0
45.0
40.0
Heat Flow [mW]
50.0
75.0
100.0
125.0
150.0
175.0
Temperature [℃]

*FIG. 4*

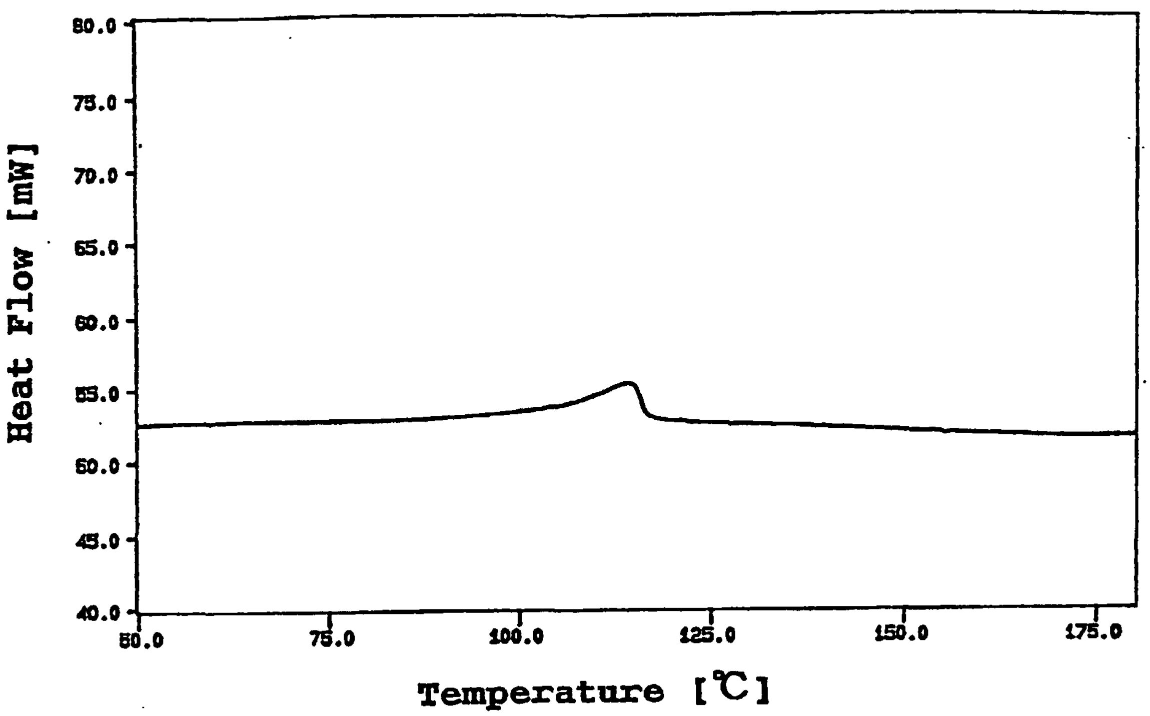
80.0
75.0
70.0
65.0
60.0
55.0
50.0
45.0
40.0
Heat Flow [mW]
50.0
75.0
100.0
125.0
150.0
175.0
Temperature [℃]